# NEUE EUROPÄISCHE PATENTSCHRIFT

(11) **EP 1 087 853 B2**
(45) Veröffentlichungstag und Bekanntmachung des Hinweises auf die Entscheidung über den Einspruch: **24.08.2005**
(45) Hinweis auf die Patenterteilung: 13.03.2002
(21) Anmeldenummer: 99938139.5
(22) Anmeldetag: 31.05.1999
(51) Int. Cl.: B23C 5/20, B23D 37/00

(54) **VERFAHREN ZUR SPANENDEN BEARBEITUNG VON ROTATIONSSYMMETRISCHEN WERKSTÜCKFLÄCHEN**
METHOD FOR MACHINING ROTATIONALLY SYMMETRICAL WORK PIECE SURFACES
PROCEDE D'USINAGE PAR ENLEVEMENT DE MATIERE DE SURFACES DE PIECES A SYMETRIE DE REVOLUTION

(30) Priorität: 19.06.1998 DE 29810969 U
(43) Veröffentlichungstag der Anmeldung: 04.04.2001
(73) Patentinhaber: SANDVIK AKTIEBOLAG, 811 81 Sandviken (SE)
(72) Erfinder: WERMEISTER, Günter, D-40549 Düsseldorf (DE)
(74) Vertreter: Weber, Dieter
(86) Internationale Anmeldenummer: PCT/DE1999/001667
(87) Internationale Veröffentlichungsnummer: WO 1999/067046

(56) Entgegenhaltungen:
- EP-A- 0 117 242
- EP-A- 0 542 026
- FR-A- 2 317 986
- GB-A- 2 030 899
- JP-A- 7 299 636
- US-A- 1 007 317
- US-A- 4 867 616
- US-A- 5 088 861
- US-A- 5 791 832

## Beschreibung

Die vorliegende Erfindung betrifft ein Verfahren zur spanenen Bearbeitung nach dem Oberbegriff des Patentansprüchs 1.

Ähnliche Schneideinsätze, Schneidwerkzeuge und ein damit anzuwendendes Bearbeitungsverfahren werden in der deutschen Patentanmeldung Nr. 41 35 681 bzw. die dazu korrespondierende europäische Patentanmeldung Nr. 542 026 beschrieben.

Diese Druckschrift beschreibt eine Vorrichtung und ein Verfahren zur Bearbeitung von rotationssymmetrischen Werkstückflächen, wobei unterschiedliche Schneideinsätze entlang eines scheibenförmigen Werkzeugträgers angeordnet sind und nacheinander mit dem zu bearbeitenden Werkstück in Eingriff gebracht werden. Dabei erfolgt eine abschließende Bearbeitung als Schrupp- und Schlichtvorgang, indem ein Schneideinsatz, dessen Hauptschneidkante im wesentlichen im Zickzack verläuft, also aus vorspringenden und rückspringenden Abschnitten des Schneideinsatzes gebildet wird, zunächst in radialer Richtung zugestellt wird und dadurch in einem Schruppvorgang eine gewisse Schichtdicke von der zu bearbeitenden Werkstückfläche abträgt, woraufhin dann das Werkzeug in axialer Richtung bewegt wird, um dadurch einen Schlichtvorgang durchzuführen, durch welchen eine Feinbearbeitung vorgenommen wird.

Aus der US 4,867,616 ist ein Schneideinsatz bekannt, der die Grundform eines Prismas hat, mit zwei im wesentlichen parallelen, oberen und unteren Flächen, sowie mit mindestens drei Seitenflächen, die zu den oberen und unteren Flächen im wesentlichen senkrecht verlaufen, wobei am Übergang mindestens einen der Seitenflächen zu den oberen oder unteren Flächen eine Schneidkante ausgebildet ist und wobei diese mindestens eine Seitenfläche nicht eben ist und abwechselnd, in der Draufsicht von oben auf die obere Fläche oder von unten auf die untere Fläche gesehen, vorstehende- und rückspringende Abschnitte hat, wobei wirksame Abschnitte von Hauptschneidkanten mindestens im Bereich der vorstehenden Abschnitte ausgebildet sind und wobei sich gegebenenfalls Nebenschneidkanten von den relativ vorstehenden Abschnitten der Hauptschneidkanten rückwärts entlang der rückspringenden Abschnitte mindestens um eine vorgegebene Einstichtiefe erstrecken.

Bei diesem Schneideinsatz sind die Nebenschneidkanten gegenüber den Hauptschneidkanten teilweise um 60° und in den Eckbereichen um 45° abgewinkelt. Weiterhin werden die Spanflächen durch jedem Abschnitt einer Hauptschneidkante individuell zugeordnete Vertiefungen gebildet, wobei sich im mittleren Bereich einer Hauptschneidkante ein Winkel zwischen Spanfläche und Hauptfreifläche im Bereich von 62° bis 72° ergibt.

Entsprechende Schneideinsätze werden so an einem Fräswerkzeug so montiert, daß ihre Hauptschneidkanten geringfügig überlappen und wechselseitig die Hauptschneidkanten eines Schneideinsatzes die rückspringenden Bereiche eines nächstfolgenden Schneideinsatzes abdecken, so daß die Nebenschneidkanten nur mit Ihren unmittelbar an die Hauptschneiden angrenzenden Bereichen mit dem Werkstück in Eingriff kommen können. Ein entsprechendes Werkzeug ist ausschließlich für eine Zustellung in radialer Richtung vorgesehen, um z. B. Nuten oder dergleichen in ein Werkstück einzufräsen.

Gegenüber diesem Stand der Technik liegt der vorliegenden Erfindung die Aufgabe zugrunde, ein Verfahren zur Bearbeitung von Werkstücken zu schaffen, bei welchem der Schneideinsatz bei der Bearbeitung von Werkstücken nicht nur radial, sondern auch in axialer Richtung zugestellt werden soll, wobei die entsprechenden Werkstückflächen rationell und in guter Qualität, d. h. mit geringen Toleranzen hergestellt werden sollen.

Diese Aufgabe wird durch ein Verfahren gemäß Anspruch 1 gelöst wobei bevorzugte Ausgestaltungen in den abhängigen Ansprüchen definiert sind.

Die Auswahl spezieller Winkel ermöglicht zum einen eine positive Schneidengeometrie sowohl während der radialen als auch während der axialen Zustellung zum Werkstück, und darüber hinaus werden auch die auftretenden Reaktionskräfte relativ gering gehalten, so daß sauber definierte Werkstückoberflächen mit engen Toleranzen hergestellt werden können.

Die Ausgestaltung des erfindungsgemäßen Schneideinsatzes ermöglicht es, den Schneideinsatz bezüglich der Zustellrichtung etwas abwärts zu neigen, wobei einerseits für die verbesserte radiale Zustellung des Schneideinsatzes an das Werkstück bzw. an die zu bearbeitende Werkstückfläche eine Freifläche bereitgestellt wird und es dennoch möglich ist, eine positive Schneidkantengeometrie aufrechtzuerhalten, durch welche die auftretenden Schneidkräfte vermindert werden.

Bei dem erfindungsgemäßen Verfahren wird die der Erfindung zugrundeliegende Aufgabe unter anderen dadurch gelöst, daß in einem Werkzeug ein entsprechender Schneideinsatz verwendet wird und daß der Werkzeugsitz eine Stützfläche für die obere oder untere Fläche des Schneideinsatzes aufweist, welche bezüglich der radialen Zustellrichtung um einen Winkel zwischen 8° und 12° abfallend geneigt ist.

Das Verfahren verwendet einen Schneideinsatz und ein Schneidwerkzeug der vorstehend genannten Art, wobei die radiale Zustellung des Schneideinsatzes in Richtung auf die Werkstückoberfläche derart erfolgt, daß die obere und die untere Fläche bezüglich dieser Zustellrichtung nach vom abfallend geneigt sind.

Die Begriffe "radiale Zustellrichtung" und "axiale Richtung" beziehen sich dabei in erster Linie auf ein um eine Achse rotierendes Werkstück, so daß bei der Bearbeitung eine rotationssymmetrische Fläche an diesem Werkstück erzeugt wird. Dabei erfolgt die Zustellung im allgemeinen in der Weise, daß die Schneidkante und die Rotationsachse des rotierenden Werkstückes in einer gemeinsamen Ebene liegen und die Zustellung des Schneideinsatzes auch genau in dieser Ebene zunächst in radialer Richtung erfolgt. Nachdem der gewünschte Durchmesser der rotationssymmetrischen Werkstückfläche im wesentlichen erreicht worden ist, erfolgt eine axiale Bewegung des Schneideinsatzes relativ zu dem Werkstück, so daß hierdurch eine Feinbearbeitung erfolgt und insbesondere die zunächst noch zwischen den unterbrochenen Hauptschneidkanten stehengebliebenen Bereiche durch axiales Drehen abgetragen werden.

Gemäß der Erfindung beträgt der Komplemen-Komplementärwinkel α zwischen der Spanfläche und einer zur Ebene der Freiflächen der Hauptschneidkanten senkrechten Ebene zwischen 14 und 18° und bei einerbevorzugten Ausführungsform 16°.

Dies bedeutet z. B. im Falle der zuletzt genannten, bevorzugten Ausführungsform, daß der Sitz für den Schneideinsatz bzw. die oberen und unteren Flächen des Schneideinsatzes bezüglich der Zustellrichtung um einen Winkel von etwa 10° geneigt werden können, wobei dennoch im Bereich der Hauptschneidkante ein positiver Spanwinkel von etwa 6° verbleibt. Die Neigung der oberen und unteren Flächen um etwa 10° gegenüber der Zustellrichtung bedeutet gleichzeitig, daß die Ebene der Freiflächen, die aufgrund derprismatischen Grundform des Schneideinsatzes im wesentlichen senkrecht zu den oberen und unteren Flächen verläuft, gegenüber einer Tangente an die Werkstückoberfläche im Bereich der aktiven Hauptschneidkante ebenfalls um 10° geneigt ist, so daß ein effektiver Freiwinkel von ca. 10° gebildet wird. Es versteht sich, daß im Falle einer rotierenden Werkstückfläche dieser Freiwinkel aufgrund der Krümmung der erzeugten Fläche unmittelbar hinter der Schneidkante noch zunehmend größer wird.

Diese Schneidkantengeometrie und diese Anordnung des Schneideinsatzes führen zu sehr geringen Schneidkräften, so daß schädliche Vibrationen des Werkstückes, wie sie bei anderen Schneidkantengeometrien auftreten können, weitgehend vermieden werden. Gleichzeitig wird der Schneidkantenverschleiß reduziert.

Außerdem ermöglicht es die konkret gewählte Geometrie des Schneideinsatzes, daß Hauptschneidkanten sowohl am Übergang der betreffenden Seitenfläche zur oberen Fläche als auch am Übergang dieser Seitenfläche zur unteren Fläche des Schneideinsatzes ausgebildet werden können. Der Schneideinsatz kann damit nach dem Verschleiß einer seiner Hauptschneidkanten gewendet werden und kann emeut verwendet werden. Dieser Effekt wird nochmals verdoppelt in einer bevorzugten Ausführungsform der Erfindung, bei welcher der Schneideinsatz die Grundform eines Quaders hat mit zwei kürzeren und zwei längeren Seitenflächen, wobei Schneidkanten jeweils an zwei gegenüberliegenden Seitenflächen und zwar jeweils am Übergang zur oberen und zur unteren Fläche ausgebildet sind, so daß insgesamt vier Hauptschneidkanten gebildet werden, die entsprechend den vor- und zurückspringenden Bereichen dieser Seitenflächen unterbrochene Hauptschneidkanten sind, an die jeweils Nebenschneidkanten anschließen, die sich mindestens ein Stück weit in die rückspringenden Bereiche der betreffenden Seitenflächen erstrecken.

Bei dieser Ausführungsform hat man insgesamt vier Schneidkanten zur Verfügung, die jeweils nach Verschleiß einer dieser Schneidkanten gewechselt werden können. Dies macht den erfindungsgemäßen Schneideinsatz im Gebrauch sehr wirtschaftlich.

Besonders bevorzugt ist eine Ausführungsform der Erfindung, bei welcher die einzelnen Abschnitte der unterbrochenen Hauptschneidkante auf einer gemeinsamen Geraden liegende Hauptschneidkantenabschnitte sind. Dies erleichtert das Herstellen von rotationssymmetrischen Flächen.

Die an die Hauptschneidkantenabschnitte angrenzenden Nebenschneidkanten sollten in der bevorzugten Ausführungsform der Erfindung, gesehen in der Draufsicht auf die obere oder untere Fläche gegenüber den Hauptschneidkanten um einen Winkel zwischen 65° und 70°, insbesondere um 67,5° abgewinkelt sein. Dabei sollte jeder der Hauptschneidkantenabschnitte möglichst symmetrisch auf beiden Seiten von einer entsprechenden Nebenschneidkante begrenzt werden. Auf diese Weise ist die axiale Schlichtbewegung in beiden Richtungen möglich, was das entsprechende Bearbeitungsverfahren vereinfacht.

Vorzugsweise sind mindestens zwei vorspringende Bereiche an den betreffenden Seitenflächen und damit zwei Hauptschneidkantenabschnitte vorgesehen, die durch einen rückspringenden Bereich unterbrochen sind, wobei sich Nebenschneidkanten von den Enden der Hauptschneidkanten in diesen rückspringenden Bereich hinein erstrecken. Besonders bevorzugt ist jedoch eine Ausführungsform der Erfindung, bei welcher insgesamt drei vorspringende Bereiche vorgesehen sind, wobei einer zentral in der Mitte der entsprechenden Seitenfläche vorgesehen ist und eine zentral angeordnete Hauptschneidkante definiert, wohingegen die beiden anderen vorspringenden Bereiche in der Nähe der entgegengesetzt liegenden Enden dieser Seitenfläche angeordnet sind und dort Hauptschneidkantenabschnitte bilden, die am Übergang zu den jeweils anderen Seitenflächen durch relativ kurze Nebenschneidkantenabschnitte begrenzt werden, wobei die Länge dieser Nebenkantenabschnitte kürzer ist als die Tiefe der rückspringenden Bereiche der Seitenflächen.

Besonders bevorzugt ist eine Ausführungsform der Erfindung, bei welcher innerhalb der Vorsprünge Vertiefungen in den Spanflächen ausgebildet sind, welche auch den Nebenschneidkanten beim axialen Vorschub eine positive Schneidkantengeometrie verleihen.

Im übrigen bewirkt die relative Abwinkelung der Nebenschneidkanten zu den Hauptschneidkanten in Verbindung mit den in gleicher Weise abgewinkelten Freiflächen der Nebenschneidkanten gegenüber den Freiflächen der Hauptschneidkanten und in Verbindung mit der Neigung des Schneideinsatzes in Zustellrichtung, daß auch beim axialen Vorschub die Freiflächen der Nebenschneidkantem einen positiven Freiwinkel mit dem von den Nebenschneidkanten erzeugten Werkstückflächen bilden. Durch diese Maßnahme werden auch die axialen Schneid- und Vorschubkräfte verringert, was zusätzlich zu einem ruhigeren Lauf des rotierenden Werkstückes, oder, im Falle eines rotierenden Werkzeuges, zum ruhigeren Lauf dieses Werkzeuges beiträgt, so daß durch diese Bearbeitung Flächen in sehr hoher Qualität zu gleichzeitig sehr wirtschaftlichen Bedingungen hergestellt werden können.

Zweckmäßigerweise weist ein entsprechender Schneideinsatz eine zentrale Bohrung auf, deren Achse sich senkrecht zu der oberen und unteren Fläche erstreckt. Diese Bohrung kann im Zentrum des Schneideinsatzes zwischen oberer und unterer Fläche etwas verjüngt sein bzw. im Bereich der oberen und unteren Flächen einen mehr oder weniger konischen Sitz für eine Spannschraube definieren, so daß der Schneideinsatz mit Hilfe einer entsprechenden Spannschraube auf einem passenden Sitz eines entsprechenden Werkzeuges befestigt werden kann.

Die vorstehend definierte Geometrie des Schneideinsatzes ermöglicht es außerdem, daß dieser in vorteilhafter und wirtschaftlicher Weise in einem Gesenk geformt werden kann, was die Herstellungskosten für einen solchen Schneideinsatz beträchtlich vermindert. Gleichzeitig hat der Schneideinsatz eine positive Schneidgeometrie und positive Freiwinkel und dennoch sowohl an der oberen Fläche als auch an der unteren Fläche jeweils Schneidkanten, so daß der erfindungsgemäße Schneideinsatz hervorragende Schneideigenschaften mit einer sehr kostengünstigen Herstellungsweise und darüber hinaus auch kostengünstigem Verschleißverhalten verbindet.

Das entsprechende Schneidwerkzeug ist dem Schneideinsatz angepaßt, so daß der Sitz für den Schneideinsatz in diesem Werkzeug gegenüber der Zustellrichtung des Werkzeuges einen abfallenden Winkel von 8 bis 12° hat. Außerdem hat der Sitz eine Gewindebohrung zur Aufnahme einer Spannschraube, mit welcher ein entsprechender Schneideinsatz befestigt wird.

Das Verfahren ist dadurch gekennzeichnet, daß der Neigungswinkel der oberen und unteren Flächen relativ zur Zustellrichtung im bereich zwischen 8 und 12° liegt, wobei sich ein Winkel von 10° in der Praxis als zweckmäßig erwiesen hat.

Weitere Vorteile, Merkmale und Anwendungsmöglichkeiten der vorliegenden Erfindung ergeben sich aus der folgenden Beschreibung einer bevorzugten Ausführungsform und der dazugehörigen Figuren. Es zeigen:
- Figur 1: einen erfindungsgemäßen Schneideinsatz in einer perspektivischen Ansicht,
- Figur 2: eine (gegenüber Figur 1 verkleinerte) Draufsicht von oben auf die obere Fläche 2 des Schneideinsatzes gemäß Figur 1,
- Figur 3: schematisch einen Schneideinsatz in einer Seitenansicht in der vorgesehenen Arbeitsstellung,
- Figur 4: eine teilweise Schnittansicht mit einem Blick auf die Schnittebene IV-IV in Figur 3,
- Figur 5: einen der vorspringenden Bereiche einer Seitenfläche in stark vergrößerter Darstellung und in der Draufsicht von oben,
- Figur 6: eine vergrößerte Seitenansicht des Schneidkantenbereiches und
- Figur 7: eine teilweise Schnittansicht auf eine Schnittebene entsprechend der Linie VII-VII in Figur 6.

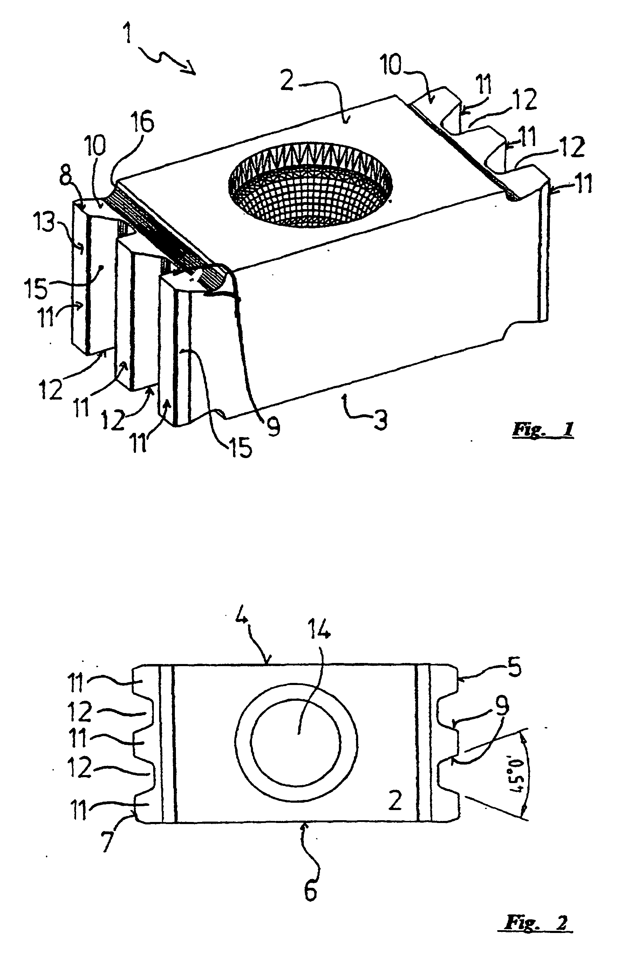

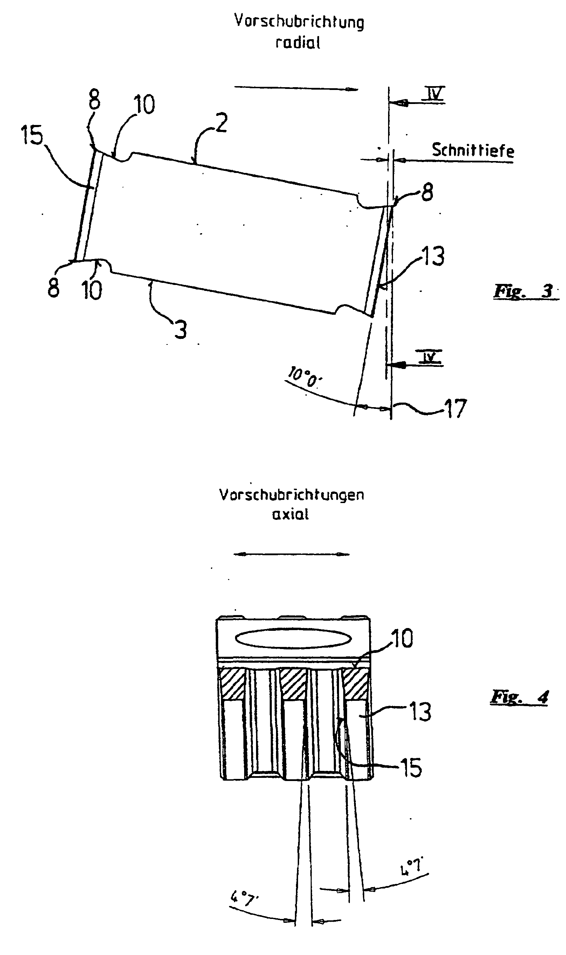

Man erkennt in der perspektivischen Darstellung gemäß Figur 1 den in seiner Grundform im wesentlichen quader- oder prismenförmigen Schneideinsatz 1, der zwei im wesentlichen ebene und parallele obere und untere Flächen 2 bzw. 3 hat, sowie hierzu senkrecht verlaufende Seitenflächen, die in Figur 2 mit 4, 5, 6 und 7 bezeichnet sind. Dabei sind auch die gegenüberliegenden Seitenflächen 4 und 6 im wesentlichen eben, wohingegen die verbleibenden kürzeren, gegenüberliegenden Seitenflächen 5 und 7 abwechselnd vorspringende Bereiche 11 und rückspringende Bereiche 12 definieren. Dabei liegen aber die Stirnflächen 13 (s. Figur 1) aller vorspringenden Bereiche 11 wieder in einer gemeinsamen Ebene, und die rückspringenden Bereiche 12 haben im wesentlichen auch die gleiche Tiefe, springen also gegenüber der durch die Flächen 13 definierten Ebene um den gleichen Betrag zurück. Die Schnittlinie zwischen den oberen und unteren Flächen 2 bzw. 3 jeweils mit den gegenüberliegenden, strukturierten Seitenflächen 5 und 7 definiert Hauptschneidkanten 8, die sich jeweils entsprechend den am weitesten vorspringenden Bereichen entlang des oberen Randes der vorderen Flächen 13 erstrecken, sowie Nebenschneidkanten 9, die sich entlang eines Abschnittes der rückwärts verlaufenden Abschnitte der Flächen 5 und 7 erstrecken. Im Übergangsbereich zu den Seitenflächen 5 und 7 weisen die oberen und unteren Flächen 2, 3 jeweils Auskehlungen oder Vertiefungen auf, durch welche einerseits Spanflächen 10 gebildet werden, die an die Schneidkanten 8 bzw. 9 angrenzen, wobei zum inneren des Schneideinsatzes gekrümmte Spanformungsflächen 16 anschließen, die sich noch über die rückspringenden Bereiche 12 hinaus in den Hauptteil des Schneideinsatzes 1 hinein erstrecken und schließlich an der Ebene der oberen bzw. unteren Flächen 2 bzw. 3 enden.

Der Schneideinsatz hat die Symmetrie eines Quaders, d. h. er ist spiegelbildlich bezüglich drei zueinander senkrecht stehenden Ebenen, die parallel zu den Begrenzungsflächen des Quaders durch das Zentrum desselben verlaufen oder, anders gesprochen, rotationssymmetrisch bezüglich Rotationen um 180° jeweils um drei zueinander senkrecht stehende Achsen durch das Zentrum des Quaders. Konkret bedeutet dies, daß jeder der Schneideinsätze 1 vier verschiedene, nacheinander einsetzbare Schneidkantenbereiche hat, die jeweils von einer Gruppe aus drei Hauptschneidkanten 8 mit den jeweils an eine Hauptschneidkante 8 angrenzenden Nebenschneidkanten 9 haben.

Figur 3 zeigt den Schneideinsatz 1 in einer mehr schematisch dargestellten Seitenansicht in einer aktiven Schneidposition bei radialem Vorschub. Die radiale Vorschubrichtung wird durch einen Pfeil angezeigt, wobei sich die aktive Schneidkante 8 genau auf der Höhe der Achse eines hier nicht dargestellten, rotierenden Werkstückes befindet. Bei Kontakt mit dem Werkstück definiert die vertikale Linie 17 die Lage einer Tangentialebene an die bearbeitete Oberfläche des rotierenden Werkstückes.

Wie man sieht, sind die oberen und unteren Flächen 2 und 3 gegenüber der Vorschubrichtung um einen Winkel von etwa 10° geneigt, und damit ist auch die Fläche 13, die bezüglich der Schneidkante 8 eine Freifläche definiert, um einen Winkel von 10° gegenüber der Tangentialebene 17 an die Werkstückoberfläche geneigt. Gleichzeitig ist jedoch die an die Schneidkante 8 angrenzende Spanfläche 10 gegenüber der oberen Fläche 2 des Schneideinsatzes um ca. 16° einwärts geneigt, so daß die Schneidkante 8 bezüglich der durch die Ebene 17 definierten Werkstückoberfläche immer noch eine positive Schneidgeometrie mit einem positiven Spanwinkel von ca. 6° hat. Ein positiver Spanwinkel reduziert generell die bei der spanenden Bearbeitung auftretenden Schneidkräfte. Eine weitere zur Ebene 17 parallele Linie deutet die maximal vorgesehene Schnittiefe für den erfindungsgemäßen Schneideinsatz an.

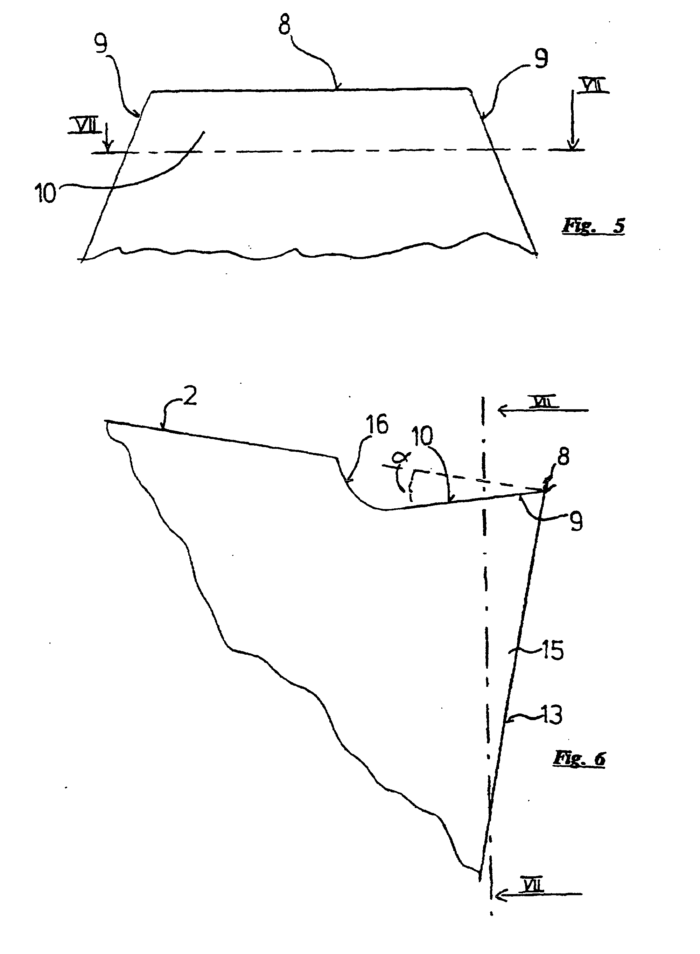

Wenn der Schneideinsatz um die vorgesehene Schnittiefe in die Werkstückoberfläche eingedrungen ist, so sind dadurch entsprechend der Aufteilung in drei Schneidkanten 8 mit den angrenzenden Nebenschneidkanten 9 Nuten mit trapezförmigem Querschnitt in der Werkstückoberfläche erzeugt worden Anschließend erfolgt eine Bewegung des Schneideinsatzes 1 relativ zum Werkstück in axialer Richtung, d. h. in Figur 3 senkrecht zur Papierebene, oder, wie in der Frontalansicht gemäß Figur 4 gezeigt, in der Papierebene, und zwar wahlweise in beiden Richtungen. Durch diese axiale Vorschubbewegung wird durch die Nebenschneidkanten 9 das zwischen den bereits erzeugten Nuten stehengebliebene Material des Werkstückes abgetragen. Aufgrundderspeziellen Form und Anordnung der Vorsprünge 11 und der rückspringenden Bereiche 12 in Verbindung mit der Neigung der Flächen 2 und 3 gegenüber einer Horizontalen erreicht man auch für die Nebenschneidkanten 9 bei axialem Vorschub einen positiven Freiwinkel. Dies ist in bereits in Figur 4 angedeutet und wird darüber hinaus in den vergrößerten Darstellungen der Figuren 5 bis 7 nochmals verdeutlicht.

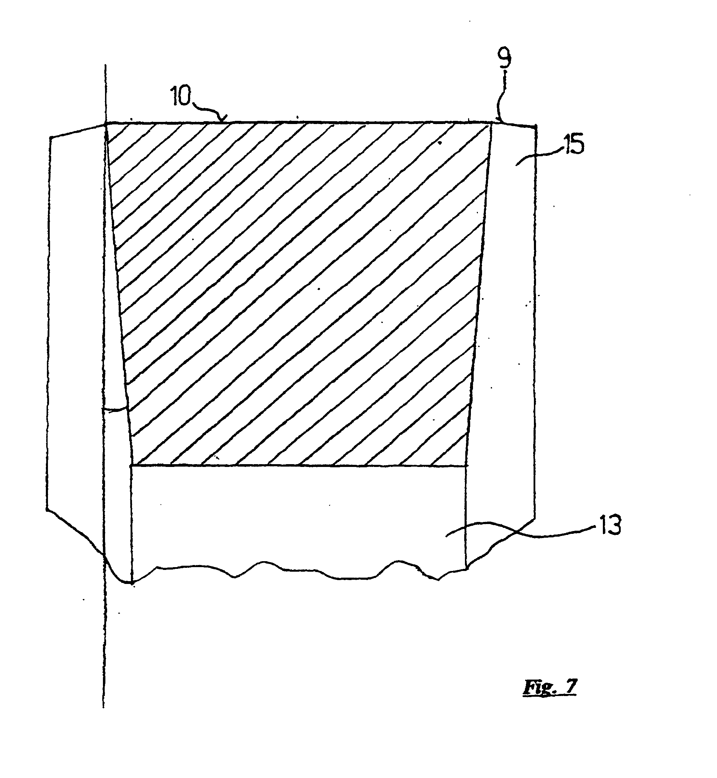

Figur 5 ist eine Ansicht von oben auf die Spanfläche 10 eines der hier nur weggebrochen dargestellten vorspringenden Bereiche 11. Man erkennt dabei die Hauptschneidkante 8 und die beiden angrenzenden Nebenschneidkanten 9, welche die Spanfläche 10 begrenzen. Mit einer strichpunktierten Linie ist eine Schnittebene VII-VII dargestellt, wobei die entsprechende Schnittansicht in Figur 7 wiedergegeben ist. Figur 6 ist die zu Figur 5 korrespondierende Seitenansicht des Schneidkantenbereiches eines entsprechenden Schneideinsatzes. Auch hier ist der Schneideinsatz in seiner geneigten Arbeitsposition dargestellt, wobei der Neigungswinkel der oberen Fläche 2 gegenüber der horizontalen Vorschubrichtung bzw. der Neigungswinkel der vorderen Freifläche 13 gegenüber der Werkstückoberfläche kleiner ist als der Neigungswinkel der Spanfläche 10 gegenüber der Oberfläche 2, so daß die Schneidkante 8, wie bereits erwähnt, ihre positive Schneidgeometrie behält. Die gegenüber der oberen Fläche 2 ebenfalls senkrecht verlaufenden Flächen 15, welche Nebenfreiflächen bezüglich der Nebenschneidkanten 9 definieren, definieren die Länge der Nebenschneidkanten 9. Auch in Figur 6 ist die Schnittebene VII-VII dargestellt, wobei die Draufsicht auf diese Schnittebene in Figur 7 dargestellt ist. Diese Schnittebene VII-VII verläuft im Bereich derNebenschneidkante 9, und man erkennt aus der Zusammenschau der Figuren 5 und 6, daß die Schnittebene VII-VII sich von einem weiter zurückliegenden Bereich oben an der Nebenschneidkante 9 weiter unten der vorderen Freifläche 13 annähert und diese schließlich schneidet.

Da die Nebenschneidkanten 9 gegenüber den Hauptschneidkanten 8 etwa um einen Winkel von 70 bis 75° abgewinkelt sind und dementsprechend auch die Nebenfreiflächen 15 gegenüber den Hauptfreiflächen 13 um denselben Winkel abgewinkelt sind, ergibt sich in der Draufsicht auf die schraffierte Schnittebene eine Trapezform, so daß in dieser Schnittebene, die in Figur 7 dargestellt ist und die auch die Ebene der axialen Vorschubrichtung der Schneideinsätze ist, die obere Spanfläche 10 und die Nebenfreifläche 15 einen Winkel einschließen, der kleiner als 90° ist. Damit ergibt sich auch für die Nebenschneidkanten ein positiver Freiwinkel, der in dem dargestellten Ausführungsbeispiel konkret bei etwa 4° liegt. Darüber hinaus könnten die Spanflä- 5 chen 10 in den vorspringenden Bereichen 11 auch zusätzlich noch Vertiefungen aufweisen, so daß die Nebenschneidkanten 9 darüber hinaus auch noch eine positive Schneidgeometrie haben könnten, was jedoch in dem in den Figuren dargestellten Ausführungsbeispiel nicht vorgesehen ist.

Aufgrund der Tatsache, daß sämtliche Begrenzungsflächen der vorspringenden Bereiche 11 und der rückspringenden Bereiche 12 exakt senkrecht zu den oberen und unteren Flächen 2 und 3 verlaufen, wobei selbstverständlich auch die Seitenflächen 4 und 6 senkrechtzu diesen oberen und unteren Seitenflächen 2 und 3 verlaufen (was auch durch den Begriff "Grundform eines Prismas" zum Ausdruck gebracht wird), kann der erfindungsgemäße Schneideinsatz im Gesenk hergestellt werden, was die Herstellung relativ kostengünstig macht. Dennoch hat der Schneideinsatz insgesamt vier nacheinander wechselbare und zum Einsatz kommende Schneidkantenbereiche und jeder der Schneidkantenbereiche hat mindestens an den Hauptschneidkanten eine positive Schneidgeometrie und es werden sowohl an den Hauptfreiflächen als auch an den Nebenfreiflächen positive Freiwinkel gebildet. Diese spezielle Geometrie trägt dazu bei, daß die auftretenden Schneidkräfte auf einem Minimum gehalten werden, woraus sich die besonders gute Eignung des Schneideinsatzes für Fein- bzw. Schlichtbearbeitungsvorgänge ergibt, da dann auch das Werkstück weniger leicht zum Rattern oder zu Vibrationen neigt und somit sehr glatte und saubere Flächen hergestellt werden können. Gleichzeitig ist der Schneideinsatz aufgrund der aufgeteilten Schneidkanten auch für Grobbearbeitungen bzw. Schruppbearbeitungen geeignet, d. h. es können z. B. bei rotierenden Werkstücken zunächst mit diesem Schneideinsatz in radialer Richtung Nuten eingestochen werden, wobei die im Bereich der Einstichtiefe stehengebliebenen Bereiche dann durch axiale Vor- und Rückwärtsbewegungen abgetragen werden, woraufhin der Einstichvorgang wiederholt werden kann und schließlich der letzte Einstichvorgang, möglicherweise mit einer geringeren Einstichtiefe, durch die abschließende Schlichtbearbeitung, die durch axiale Vor- und Rückbewegungen erfolgt, abgeschlossen wird.

Der Schneideinsatz verbindet daher eine kostengünstige Herstellung mit günstigem Verschleißverhalten, hoher Vielseitigkeit, hoher Wirtschaftlichkeit aufgrund der mehrfach wechselbaren Schneidkanten und schließlich auch noch einersehr hohen Bearbeitungsqualität.

## Patentansprüche

1. Verfahren zur spanenden Bearbeitung von Werkstückflächen, wie zum Beispiel von Kurbelwellen, wobei ein Schneidwerkzeug mit einem Schneideinsatz mit mehreren Schneidkanten verwendet wird und wobei das Schneidwerkzeug mit einer aktiven Schneidkante (8) zunächst in radialer Richtung auf das Werkstück zu gestellt wird und anschließend zur Feinbearbeitung in axialer Richtung relativ zu dem Werkstück bewegt wird, **dadurch gekennzeichnet, daß** zur Herstellung rotationssymmetrischer Oberflächen mindestens ein Schneideinsatz verwendet wird, der die Grundform eines Prismas hat, mit zwei im wesentlichen parallelen oberen und unteren Flächen (2, 3), sowie mit mindestens drei Seitenflächen (4, 6, 5, 7), die zu den oberen und unteren Flächen im wesentlichen senkrecht verlaufen, wobei am Übergang mindestens einer der Seitenflächen (5, 7) zu der oberen oder unteren Fläche (2, 3) eine Schneidkante (8, 9) ausgebildet ist und wobei diese mindestens eine Seitenfläche (5, 7) nicht eben ist und abwechselnd, in der Draufsicht von oben auf die obere Fläche (2) oder von unten auf die untere Fläche (3) gesehen, vorstehende und rückspringende Abschnitte (11, 12) hat, wobei wirksame Abschnitte von Hauptschneidkanten (8) mindestens im Bereich der vorstehenden Abschnitte ausgebildet sind und wobei sich Nebenschneidkanten (9) von den relativ vorstehenden Abschnitten der Hauptschneidkanten (8) rückwärts entlang der rückspringenden Abschnitte (12) mindestens um eine vorgegebene Einstichtiefe erstrecken, wobei bei dem verwendeten Schneideinsatz die in dem an die Hauptschneidkanten (8) angrenzenden Bereich der oberen und unteren Flächen (2, 3) ausgebildeten Spanflächen (10) abweichend von dem generell parallelen Verlauf der oberen und unteren Flächen (2, 3) jeweils einwärts geneigt verlaufen derart, daß zwischen den Spanflächen (10) und der Ebene der Hauptfreiflächen (13), welche durch die an die Hauptschneidkanten (8) angrenzenden Bereiche der Seitenflächen (5, 7) definiert ist, ein Winkel α von weniger als 76° und mehr als 72° eingeschlossen wird, wobei die Nebenschneidkanten (9) in der Draufsicht auf die obere oder untere Fläche (2, 3) gegenüber den Hauptschneidkanten (8) um einen Winkel zwischen 65° und 70° abgewinkelt sind und wobei der Schneideinsatz gegenüber der Zustellrichtung nach vorn abfallend geneigt ist, so daß die Ebene der Freiflächen (13) an den Hauptschneidkanten (8) mit einer an der aktiven Schneidkante angelegten Tangentialebene der Werkstück oberfläche einen positiven Winkel von mehr als 8° bis 12° einschließt.

2. Verfahren nach Anspruch 1, **dadurch gekennzeichnet, daß** ein Schneideinsatz verwendet wird, dessen Nebenschneidkanten gegenüber den Hauptschneidkanten in der Draufsicht auf die obere oder untere Fläche (2, 3) um einen Winkel von 67,5° abgewinkelt sind.

3. Verfahren nach Anspruch 1, **dadurch gekennzeichnet, daß** ein Schneideinsatz verwendet wird, dessen Komplementärwinkel (α) zu dem Winkel ä 16° beträgt (α = 90 - â).

4. Verfahren nach einem der Ansprüche 1 bis 3, **dadurch gekennzeichnet, daß** ein Schneideinsatz verwendet wird, dessen Nebenschneidkanten jeweils symmetrisch zu jedem der entlang eines vorspringenden Bereiches (11) angeordneten Hauptschneidkantenabschnitt (6a, 6b) beidseitig angeordnet sind.

5. Verfahren nach einem der Ansprüche 1 bis 4, **dadurch gekennzeichnet, daß** ein Schneideinsatz verwendet wird, dessen Spanfläche durch eine Auskehlung gebildet wird, die sich über alle Haupt- und Nebenschneidkantenabschnitte einer Schneidkante erstreckt.

6. Verfahren nach einem der Ansprüche 1 bis 5, **dadurch gekennzeichnet, daß** ein Schneideinsatz verwendet wird, bei dem im Bereich der vorspringenden Bereiche zusätzliche Vertiefungen in den Spanflächen (10) ausgebildet wind, die in den Nebenschneidkanten (9) bei einem axialen Vorschub des Schneideinsatzes eine positive Schneidkantengeometrie verleihen.

7. Verfahren nach einem der Ansprüche 1 bis 6, **dadurch gekennzeichnet, daß** ein Schneideinsatz verwendet wird, der eine quaderförmige Grundform hat, wobei zwei in der Draufsicht auf die obere oder untere Fläche (2, 3) kürzere (5, 7) und zwei längere Seitenflächen (4, 6) vorgesehen sind, wobei jeweils am Übergang zwischen zwei gegenüberliegenden Seitenflächen (5, 7) und den oberen und unteren Flächen (2, 3) insgesamt vier durch rückspringende Bereiche unterbrochene Schneidkanten (8) ausgebildet sind.

8. Verfahren nach einem der Ansprüche 1 bis 7, **dadurch gekennzeichnet, daß** ein Schneideinsatz verwendet wird, der im Gesenk geformt ist.

## Claims

1. A method of cutting machining of workpiece faces, such as for example of crankshafts, wherein a cutting tool having a cutting bit with a plurality of cutting edges is used, and wherein the cutting tool is firstly fed in a radial direction towards the workpiece with an active cutting edge (8), and is then moved in the axial direction relative to the workpiece for fine machining, **characterised in that** for the production of rotationally symmetrical surfaces at least one cutting bit is used which has the basic shape of a prism with two substantially parallel, upper and lower faces (2, 3) and at least three side faces (4, 6, 5, 7), which extend substantially perpendicularly to the upper and lower faces, wherein a cutting edge (8, 9) is provided at the transition of at least one of the side faces (5, 7) to the upper or lower face (2, 3), and wherein said at least one side face (5, 7) is not flat and alternately has projecting and recessed portions (11, 12), viewed in a plan view from above on to the upper face (2) or viewed from below on to the lower face (3), wherein effective portions of main cutting edges (8) are provided at least in the region of the projecting portions and wherein secondary cutting edges (9) extend from the relatively projecting portions of the main cutting edges (8) rearwardly along the recessed portions (12) at least by a predetermined cutting depth, wherein in the case of the cutting bit used each of the rake faces (10) configured in the region of the upper and lower faces (2, 3) adjoining the main cutting edges (8) extends inclinedly inwardly deviating from the generally parallel course of the upper and lower faces (2, 3) in such a way that an angle â of less than 76° and of more than 72° is enclosed between the rake faces (10) and the plane of the main relief surfaces (13), which is defined by the regions of the side faces (5, 7) adjoining the main cutting edges (8), wherein in a plan view on to the upper or lower face (2, 3) the secondary cutting edges (9) are angled with respect to the main cutting edges (8) through an angle of between 65° and 70°, and wherein the cutting insert is inclined so as to fall away forwardly with respect to the feed direction, so that the plane of the relief surfaces (13) at the main cutting edges (8) encloses a positive angle of more than 8° to 12° with a tangential plane of the workpiece surface which is applied to the active cutting edge.

2. A method according to Claim 1, **characterised in that** a cutting bit is used, the secondary cutting edges of which are angled through an angle of 67.5° with respect to the main cutting edges in the plan view on to the upper or lower face (2, 3).

3. A method according to Claim 1, **characterised in that** a cutting bit is used, the complementary angle (α) of which to the angle â is 16° (α = 90 - â).

4. A method according to one of Claims 1 to 3, **characterised in that** a cutting bit is used, the secondary cutting edges of which are respectively arranged symmetrically at both sides in relation to each main cutting edge portion (6a, 6b) arranged along a projecting region (11).

5. A method according to one of Claims 1 to 4, **characterised in that** a cutting bit is used, the rake face of which is formed by a concave configuration which extends over all main and secondary cutting edge portions of a cutting edge.

6. A method according to one of Claims 1 to 5, **characterised in that** a cutting bit is used, wherein provided in the region of the projecting regions are additional recesses in the rake faces (10), which impart a positive cutting edge geometry to the secondary cutting edges (9) upon axial advance of the cutting bit.

7. A method according to one of Claims 1 to 6, **characterised in that** a cutting bit is used which is of a parallelepipedic basic shape, wherein there are provided two shorter (5, 7) and two longer (4, 6) side faces in the plan view on to the upper or lower face (2, 3), wherein a total of four cutting edges (8) interrupted by recessed regions is respectively provided at the transition between two mutually oppositely disposed side faces (5, 7) and the upper and lower faces (2, 3).

8. A method according to one of Claims 1 to 7, **characterised in that** a cutting bit is used which is shaped by forging.

## Revendications

1. Procédé d'usinage par enlèvement de copeaux de surfaces de pièces, comme par exemple de vilebrequins, dans lequel il est utilisé un outil de coupe doté d'un insert de coupe comportant plusieurs arêtes coupantes, dans lequel l'outil de coupe doté d'une arête coupante active (8) est avancé tout d'abord radialement sur la pièce, puis est déplacé axialement par rapport à la pièce pour effectuer un usinage fin, **caractérisé en ce que**, pour réaliser des surfaces à symétrie de révolution, il est utilisé au moins un insert de coupe qui a la forme générale d'un prisme et qui comporte deux faces supérieure et inférieure (2, 3) sensiblement parallèles, ainsi qu'au moins trois faces latérales (4, 6 ; 5, 7) qui s'étendent sensiblement perpendiculairement aux faces supérieure et inférieure (2, 3), dans lequel une arête coupante (8, 9) est conformée au niveau de la transition entre au moins une des faces latérales (5, 7) et la face supérieure ou inférieure (2, 3) et dans lequel cette face latérale (5, 7) au moins n'est pas plane et possède alternativement des portions saillantes et en retrait (11, 12), la face supérieure (2) étant vue de dessus ou bien la face inférieure (3) étant vue de dessous, dans lequel des portions de travail des arêtes coupantes principales (8) sont conformées au moins au niveau des portions saillantes et dans lequel des arêtes coupantes latérales (9) s'étendent en arrière le long des portions en retrait (12) depuis les portions relativement saillantes des arêtes coupantes principales (8) au moins sur une profondeur de contredépouille prédéterminée, dans lequel, lorsque l'on utilise l'insert de coupe, chacune des faces de coupe (10), conformées dans la région des faces supérieure et inférieure (2, 3) qui est adjacente aux arêtes coupantes principales (8), s'étend en étant inclinée en dedans et en s'écartant des faces supérieure et inférieure (2, 3) généralement parallèles de sorte que l'angle α formé par les faces de coupe (10) et le plan des faces de dépouille principales (13), lequel est défini par les régions des faces latérales (5, 7) qui sont adjacentes aux arêtes coupantes principales (8), est inférieur à 76° et supérieur à 72°, l'angle formé par les arêtes coupantes latérales (9) et les arêtes coupantes principales (8) étant compris entre 65° et 70°, la face supérieure ou inférieure (2, 3) étant vue de dessus, et l'insert de coupe étant incliné vers l'avant par rapport à la direction d'avancement, de sorte que le plan des faces de dépouille (13) au niveau des arêtes coupantes principales (8) fait avec le plan, tangentiel à l'arête coupante active, de la surface de l'outil un angle positif supérieur à 8-12°.

2. Procédé selon la revendication 1, **caractérisé en ce qu'**il est utilisé un insert de coupe dont l'angle formé par les arêtes coupantes latérales et les arêtes coupantes principales est de 67,5°, la face supérieure ou inférieure (2, 3) étant vue de dessus.

3. Procédé selon la revendication 1, **caractérisé en ce qu'**il est utilisé un insert de coupe dont l'angle complémentaire de l'angle (α) est de 16° (□ = 90-α).

4. Procédé selon l'une des revendications 1 à 3, **caractérisé en ce qu'**il est utilisé un insert de coupe dont chacune des arêtes coupantes latérales est agencée des deux côtés symétriquement par rapport à chacune des portions d'arête coupante principale (6a, 6b) agencée le long d'une région saillante (11).

5. Procédé selon l'une des revendications 1 à 4, **caractérisé en ce qu'**il est utilisé un insert de coupe dont la face de coupe est formée par une gorge qui s'étend sur toutes les portions d'arête coupante principales et latérales d'une arête coupante.

6. Procédé selon l'une des revendications 1 à 5, **caractérisé en ce qu'**il est utilisé un insert de coupe dans lequel des gorges additionnelles sont ménagées dans les faces de coupe (10) au niveau des régions saillantes, lesquelles gorges confèrent aux arêtes coupantes latérales (9) une géométrie d'arête coupante positive lors d'une avance axiale de l'insert de coupe.

7. Procédé selon l'une des revendications 1 à 6, **caractérisé en ce qu'**il est utilisé un insert de coupe ayant la forme générale d'un parallélépipède, dans lequel il est prévu deux faces latérales courtes (5, 7) et deux faces latérales longues (4, 6), la face supérieure ou inférieure (2, 3) étant vue de dessus, en tout quatre arêtes coupantes (8) interrompues par des régions en retrait étant conformées au niveau de la transition entre deux faces latérales opposées (5, 7) et les faces supérieure et inférieure (2, 3).

8. Procédé selon l'une des revendications 1 à 7, **caractérisé en ce qu'**il est utilisé un insert de coupe qui est formé dans la matrice.
